(19) **Europäisches Patentamt / European Patent Office / Office européen des brevets**

(11) **EP 3 680 616 B1**

(12) **EUROPEAN PATENT SPECIFICATION**

(45) Date of publication and mention of the grant of the patent:
**26.10.2022 Bulletin 2022/43**

(21) Application number: **18852966.3**

(22) Date of filing: **02.08.2018**

(51) International Patent Classification (IPC):
**G01C 21/16** (2006.01)    **G01C 21/20** (2006.01)
**G01C 22/00** (2006.01)

(52) Cooperative Patent Classification (CPC):
**G01C 21/206; G01C 21/16; G01C 22/006**

(86) International application number:
**PCT/CN2018/098376**

(87) International publication number:
**WO 2019/047637 (14.03.2019 Gazette 2019/11)**

(54) **LOCALIZATION METHOD AND APPARATUS, MOBILE TERMINAL AND COMPUTER-READABLE STORAGE MEDIUM**

LOKALISIERUNGSVERFAHREN UND VORRICHTUNG, MOBILES ENDGERÄT UND COMPUTERLESBARES SPEICHERMEDIUM

PROCÉDÉ ET APPAREIL DE LOCALISATION, TERMINAL MOBILE ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2017 CN 201710805524**

(43) Date of publication of application:
**15.07.2020 Bulletin 2020/29**

(73) Proprietor: ZTE Corporation
**Shenzhen, Guangdong 518057 (CN)**

(72) Inventors:
• **CHEN, Shijun**
  **Shenzhen, Guangdong 518057 (CN)**
• **LIU, Xinxin**
  **Shenzhen, Guangdong 518057 (CN)**
• **XU, Xiaolong**
  **Shenzhen, Guangdong 518057 (CN)**
• **CHEN, Dawei**
  **Shenzhen, Guangdong 518057 (CN)**
• **WANG, Yuanyuan**
  **Shenzhen, Guangdong 518057 (CN)**

(74) Representative: **Regimbeau**
**20, rue de Chazelles**
**75847 Paris Cedex 17 (FR)**

(56) References cited:
CN-A- 103 487 049      CN-A- 103 995 588
CN-A- 104 075 714      US-A- 5 583 776
US-A1- 2014 236 479

• HUANG CHENGKAI ET AL: "Indoor positioning system based on improved PDR and magnetic calibration using smartphone", 2014 IEEE 25TH ANNUAL INTERNATIONAL SYMPOSIUM ON PERSONAL, INDOOR, AND MOBILE RADIO COMMUNICATION (PIMRC), IEEE, 2 September 2014 (2014-09-02), pages 2099-2103, XP032789492, DOI: 10.1109/PIMRC.2014.7136518 [retrieved on 2015-06-25]
• QUENTIN LADETTO: "On foot navigation: continuous step calibration using both complementary recursive prediction and adaptive Kalman filtering", GPS 2000 - PROCEEDINGS OF THE 13TH INTERNATIONAL TECHNICAL MEETING OF THE SATELLITE DIVISION OF THE INSTITUTE OF NAVIGATION (ION GPS 2000), THE INSTITUTE OF NAVIGATION, 8551 RIXLEW LANE SUITE 360 MANASSAS, VA 20109, USA, 22 September 2000 (2000-09-22), pages 1735-1740, XP056002505,

## Description

### CROSS-REFERENCES TO RELATED APPLICATIONS

This application is based on and claims priority to a Chinese patent application No. 201710805524.1 filed on September 08, 2017.

### TECHNICAL FIELD

The present application relates to, but is not limited to, the positioning field, and in particular, relates to a positioning method and apparatus, a mobile terminal and a computer-readable storage medium.

### BACKGROUND

With the rapid development of the Internet, position-based services have become an indispensable part in people's life. As one of the key technologies of position-based services, the positioning technology has gained more and more attention. The positioning technology as a whole can be divided into indoor positioning and outdoor positioning. Global positioning system (GPS) is generally used for the outdoor positioning, but once indoor, GPS signal attenuation rapidly attenuates due to the shielding of buildings, and accurate positioning services cannot be provided for human beings at all.

However, in large indoor places such as shopping malls, underground garages and exhibitions, the need for accurate indoor positioning is becoming more and more urgent. For a general user, in a strange and complex indoor environment, accurate positioning can help the user to know the position of the user in real time, the user can plan the advancing route under the condition that the destination is known, and the situation that the user is lost is avoided. The more valuable situation of indoor positioning is also reflected in the disaster occurrence time, for rescuers of disaster rescue and victims of self-rescue, the accurate indoor positioning can better assist the rescuers and the victims in positioning and planning feasible rescue paths and escape paths in real time under the condition that sight lines of the rescuers and the victims are blocked, and larger damage caused by environmental disturbance is avoided.

At present, the common indoor positioning technologies include wireless local area network (WLAN) positioning, Bluetooth positioning and the like, but for these positioning technologies, positioning and navigation can only be performed with a network. In actual use, it is possible that currently no network exists, and the positioning cannot be performed.

Therefore, all related positioning technologies need a network and cannot be performed without the network. Further, for the related positioning technologies, external auxiliary equipment is used for performing positioning and the energy consumption of a mobile phone is too large, which is not practical for users. Further relevant technologies are also known from the following documents. Document US 2014/236479 A1 relates to a user-heading determining system for pedestrian use. Document US 5 583 776 A relates to a microcomputer-assisted position finding system that integrates GPS data, dead reckoning sensors, and digital maps into a low-cost, self-contained navigation instrument. Document HUANG CHENGKAI ET AL: "Indoor positioning system based on improved PDR and magnetic calibration using smartphone", 2014 IEEE 25TH ANNUAL INTERNATIONAL SYMPOSIUM ON PERSONAL, INDOOR, AND MOBILE RADIO COMMUNICATION (PIMRC), IEEE, 2 September 2014 (2014-09-02), pages 2099-2103, relates to an indoor positioning scheme utilizing smartphones equipped with inertial and magnetic sensors.

### SUMMARY

Embodiments of the present application provide a positioning method and apparatus and a mobile terminal.

The present disclosure provides a positioning method according to independent claim 1, a positioning apparatus according to claim 5, a mobile terminal according to claim 9 and a computer storage medium according to claim 10. Further improvements and embodiments are provided in the dependent claims.

In one aspect, an embodiment of the present application further provides a positioning method according to claim 1.

In another aspect, an embodiment of the present application further provides a positioning apparatus according to claim 5.

In another aspect, an embodiment of the present application further provides a mobile terminal including the positioning apparatus described above.

In another aspect, an embodiment of the present application further provides a computer-readable storage medium. The computer-readable storage medium stores computer-executable instructions. After being executed, the computer-executable instructions are capable of implementing the positioning method provided in any aspect described above.

According to the embodiments of the present application, the actual distance between two positions when the target object moves is determined through the preset model, the heading angle of the first position at the current sampling instant is determined according to the direction sensor, the current position can be determined through calculation combined with the predetermined reference position, and during the continuous movement of the target object, each position in the moving process can be determined. The positioning method does not need the support of a network, can achieve accurate positioning, can at least solve the problem in the related art that positioning must depend on the network, and achieves indoor positioning and accurate positioning without network coverage or with a poor network coverage effect.

## BRIEF DESCRIPTION OF THE DRAWINGS

FIG. 1 is a flowchart of a positioning method according to an embodiment of the present application;
FIG. 2 is a structural diagram of a positioning apparatus according to an embodiment of the present application; and
FIG. 3 is a flowchart of another positioning method according to an embodiment of the present application.

## DETAILED DESCRIPTION

The present application will be further described below in detail with reference to the drawings and embodiments. It is to be understood that specific embodiments described herein are merely intended to explain the present application, and not to limit the present application.

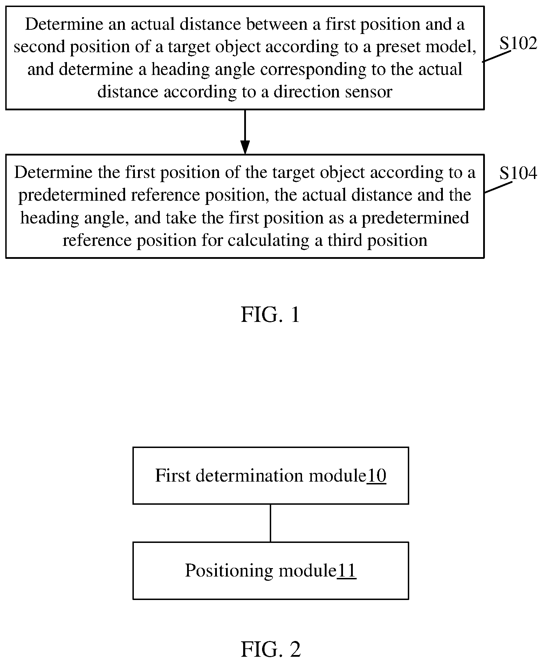

An embodiment of the present application provides a positioning method. The method includes steps S102 to S104 as shown in FIG. 1.

In S102, an actual distance between a first position and a second position of a target object is determined according to a preset model, and a heading angle corresponding to the actual distance is determined according to a direction sensor, where the first position is a position corresponding to a current sampling instant, and the second position is a position at a previous sampling instant adjacent to the current sampling instant.

In some embodiments, if the target object is a person, the preset model may be a pedestrian step size model determined for a person; and if the target object is a machine device such as a vehicle and a movable robot, the preset model may be a model determined for a machine.

The preset model may be any pre-generated positioning model, for example, a positioning model based on a neural network, a learning model based on a learning machine such as a vector machine, etc.

The preset model may be used for obtaining, according to historical data of the movement of the target object, a model capable of predicting the movement rule of the target object between the adjacent two sampling instants, so that the position of the target object in the next sampling instant can be predicted according to the preset model according to the second position in the previous sampling instant without a network. Therefore, movement positioning or trajectory tracking of the target object is achieved. The embodiment is illustrated by taking a person as an example, and in S102, the actual step size of the current step of a user is determined according to a preset pedestrian step size model, and the heading angle of the current step is determined according to the direction sensor.

The preset pedestrian step size model in the embodiment is obtained by training the current user for multiple times. For example, the distance traveled by the user is specified, the user walks at different walking speeds for multiple times, the number of training walks is n, the walking time of the user is measured each time, the number of steps of the user is determined, the interval and variance of each step are recorded, the average step size is obtained by dividing the distance by the number of steps, the average value of frequencies and the average value of variances in all steps of the pedestrian in all measurements are respectively taken as the frequency and the variance of the measurement, so that $n$ step size samples $\{L_1, L_2, ..., L_n\}$, n frequency samples $\{f_1, f_2, ..., f_n\}$ and n variance samples $\{v_1, v_2, ..., v_n\}$ are obtained, and different step size models of pedestrians can be obtained by performing linear fitting on the $n$ samples, so that the step sizes of different pedestrians at different instants can be estimated in real time during positioning.

A preset pedestrian step size model after training may be: $L_k = b + cf(k) + dv + \delta$, where $L_k$ is an actual step size of the user at a k-th instant, $f(k)$ is a step frequency of the current step of the user, $v$ is a variance of acceleration data generated by the target object (user) in the current step, $b$ may be a constant, c and $d$ are parameter values of corresponding variables respectively, $b$, c and $d$ are obtained from training the user, and $\delta$ is model system noise. In some embodiments, c is the parameter value of corresponding, $f(k)$ and $d$ is the parameter value of corresponding v.

In S104, the first position of the target object is determined according to a predetermined reference position, the actual distance and the heading angle, and the first position is taken as a predetermined reference position for calculating a third position, where the third position is a position at a next sampling instant adjacent to the current sampling instant. This embodiment is illustrated by a taking a person as an example, and the person may be replaced with other target objects. The predetermined reference position in this embodiment is the current position obtained, through calculation, from the previous step (the previous step may be the previous movement of the target object) of the current step (the current step may be the current movement of the target object). When the whole system is initialized, a user may manually position an initial position on a certain off-line map and take the initial position as a first predetermined reference position, and then after a current position has been calculated, the calculated current position may be taken as a predetermined reference position, and the current position of the next step is calculated according to the reference position. Here, one movement may be a movement in physical space, and may also be a movement within a preset duration.

According to the embodiments of the present application, the actual distance between two positions when the target object moves is determined through the preset model, the heading angle of the first position at the current sampling instant is determined according to the direction sensor, the current position can be determined through calculation based on the predetermined reference position, and during the continuous movement of the target object, each position in the moving process can be determined. The positioning method does not need the support of a network, can achieve accurate positioning, and solves the problem in the existing art that positioning needs to be performed in an environment with the network and cannot be performed without network in the related positioning technologies.

During the continuous movement of the target object, the target object will pass through many positions. Therefore, the predetermined reference position and the first position may also be connected to draw a motion route after the actual distance between the first position and the second position of the target object is determined according to the preset model and after the heading angle corresponding to the actual distance is determined according to the direction sensor. In some embodiments, if the target object is a machine device, the drawn motion route can be stored in the system of the machine device and can also be viewed by a user of the machine device. If the target object is a person, the drawing of the motion route can facilitate observation, by the user, of the route that the user walks through. After a motion route is drawn, the user can clearly observe the distance traveled by the user. In order to more clearly present the distance traveled, the initial position initially selected by the user may also be marked with a color different from the color of the movement route to facilitate user identification.

Before the actual distance between the first position and the second position of the target object is determined according to the preset model and in order to prevent misjudgment, whether the target object actually moves needs to be determined according to a certain detection method, and in more cases, the process is more suitable for the situation that the target object is a person. The detection method may include the process described below.

Accelerations in three direction axes of a three-dimensional coordinate system are obtained through a three-axis sensor, and an average acceleration at the current sampling instant is determined according to the accelerations in the three direction axes (an x-axis, a y-axis, and a z-axis which are mutually perpendicular). First acceleration data is obtained by passing average acceleration data of the current sampling instant through a first preset sliding time window, and second acceleration data is obtained by passing the average acceleration data of the current sampling instant through a second preset sliding time window, where processing time of the second preset sliding time window is shorter than processing time of the first preset sliding time window. If the second acceleration data is larger than the first acceleration data, it is detected whether the average acceleration data of the current sampling instant is the same as average acceleration data of the previous sampling instant. In a case where the average acceleration data of the current sampling instant is not the same as the average acceleration data of the previous sampling instant, it is determined that the target object actually displaced. Additionally/ alternatively, if the second acceleration data is smaller than or equal to the first acceleration data, the average acceleration data of the previous sampling instant is updated with the average acceleration data of the current sampling instant.

In order to more accurately determine whether the target object has displaced, in the case where the average acceleration data of the current sampling instant is not the same as the average acceleration data of the previous sampling instant, it may also be determined whether a time interval between an acquisition time of the average acceleration data of the previous sampling instant and an acquisition time of the average acceleration data of the current sampling instant is within a preset time range. In a case where the time interval between the acquisition time of the average acceleration data of the previous sampling instant and the acquisition time of the average acceleration data of the current sampling instant is within the preset time range, it is detected whether a first difference value between the maximum acceleration among original acceleration data corresponding to the average acceleration data of the current sampling instant and the average acceleration data of the current sampling instant is larger than a first preset difference value, and it is detected whether a second difference value between the average acceleration data of the current sampling instant and the minimum acceleration among the original acceleration data corresponding to the average acceleration data of the current sampling instant is smaller than a second preset difference value. In a case where the first difference value is larger than the first preset difference value and the second difference value is smaller than the second preset difference value, it is determined that the target object actually has displaced. Through the process, whether the user walks one step can be determined more accurately.

An embodiment of the present application further provides a positioning apparatus which may be arranged in a mobile terminal, and the structure of the apparatus is schematically shown in FIG. 2. The apparatus includes a first determination module 10 and a positioning module 11.

The first determination module 10 is configured to determine an actual distance between a first position and a second position of a target object according to a preset model, and determine a heading angle corresponding to the actual distance according to a direction sensor, where the first position is a position corresponding to a current sampling instant, and the second position is a position at a previous sampling instant adjacent to the current sampling instant. The positioning module 11 is coupled to the first determination module 10 and configured to determine the first position of the target object according to a predetermined reference position, the actual distance and the heading angle, and take the first position as a predetermined reference position for calculating a third position, where the third position is a position at a next sampling instant adjacent to the current sampling instant.

In some embodiments, if the target object is a person, the preset model may be a pedestrian step size model determined for a person; and if the target object is a machine device, the preset model may be a model determined for a machine.

The embodiment is illustrated by taking a person as an example, and the first determination module described above determines the actual step size of the current step of a user according to a preset pedestrian step size model, and determines the heading angle of the current step according to the direction sensor.

The preset pedestrian step size model in the embodiment is obtained by training the current user for multiple times. For example, the distance traveled by the user is specified, the user is required to walk for multiple times with different walking speeds, the number of training walks is n, the walking time of the user is measured each time, the number of steps of the user is determined, the interval and variance of each step are recorded, and the average step size is obtained by dividing the distance by the number of steps. The average value of frequencies and the average value of variances of all steps of the pedestrian in all measurements are respectively taken as the frequency and the variance of the measurement, so that $n$ step size samples $\{L_1,L_2,...,L_n\}$, $n$ frequency samples $\{f_1,f_2,...,f_n\}$ and $n$ variance samples $\{v_1,v_2,...,v_n\}$ are obtained. Step size models of different pedestrians can be obtained by performing linear fitting on the n samples, so that the step sizes of different pedestrians at different instants can be estimated in real time during positioning.

A preset pedestrian step size model after training may be: $L_k = b + cf(k) + dv + \delta$, where $L_k$ is an actual step size of the user at a k-th instant, $f(k)$ is a step frequency of the current step of the user, $v$ is a variance of acceleration data generated by the target object (user) in the current step, $b$ may be a constant, c and $d$ are parameter values of corresponding variables respectively, $b$, c and $d$ are obtained from training the user, and $\delta$ is model system noise. In some embodiments, c is the parameter value of corresponding, $f(k)$ and $d$ is the parameter value of corresponding v.

The step frequency here may include: the number of steps of a user per unit time; the step frequency of a pedestrian is one of moving times per unit time of a target object.

The predetermined reference position in this embodiment is the current position obtained, through calculation, from the previous step of the current step. When the whole system is initialized, a user may manually position an initial position on a certain off-line map and take the initial position as a first predetermined reference position, and then after a current position has been calculated, the calculated current position may be taken as a predetermined reference position, and the current position of the next step is calculated according to the reference position.

According to the embodiments of the present application, the actual distance between two positions when the target object moves is determined through the preset model, the heading angle of the first position at the current sampling instant is determined according to the direction sensor, the current position can be determined through calculation combined with the predetermined reference position, and during the continuous movement of the target object, each position in the moving process can be determined. The positioning method does not need a network, can achieve accurate positioning, and solves the problem in the existing art that positioning needs to be performed in an environment with the network and cannot be performed without network in the related positioning technologies.

During the continuous movement of the target object, the target object will successively pass through many positions, and therefore, the predetermined reference position and the first position may also be connected to draw a motion route after the actual distance between the first position and the second position of the target object is determined according to the preset model and after the heading angle corresponding to the actual distance is determined according to the direction sensor. In some embodiments, if the target object is a machine device, the drawn motion route can be stored in the system of the machine device and can also be viewed by a user of the machine device. If the target object is a person, the drawing of the motion route can facilitate observation, by the user, of the route that the user walks through. After a motion route is drawn, the user can clearly observe the distance traveled by the user; in order to more clearly present the distance traveled, the initial position initially selected by the user may also be marked with a color different from the color of the movement route to facilitate user identification.

In order to prevent misjudgment, whether the target object actually moves needs to be determined according to a certain detection method, and in more cases, the process is more suitable for the situation that the target object is a person. Therefore, the above apparatus may further include a second determination module, a detection module and an update module. The second determination module is configured to acquire accelerations in three direction axes of a three-dimensional coordinate system through a three-axis sensor, and determine an average acceleration of the current sampling instant according to the accelerations in the three direction axes; and obtain first acceleration data by passing average acceleration data of the current sampling instant through a first preset sliding time window, and obtain second acceleration data by passing the average acceleration data of the current sampling instant through a second preset sliding time window, where processing time of the second preset sliding time window is shorter than processing time of the first preset sliding time window. The detection module is coupled to the second determination module and configured to: in response to determining that the second acceleration data is larger than the first acceleration data, detect whether the average acceleration data of the current sampling instant is the same as average acceleration data of the previous sampling instant, and in a case where the average acceleration data of the current sampling instant is not the same as the average acceleration data of the previous sampling instant, determine that the target object actually has a position movement. The update module is couple to the second determination module and configured to: in response to determining that the second acceleration data is smaller than or equal to the first acceleration data, update the average acceleration data of the previous sampling instant with the average acceleration data of the current sampling instant.

In order to more accurately determine whether the target object has displaced, the detection module described above may further be specifically configured to: in the case where the average acceleration data of the current sampling instant is not the same as the average acceleration data of the previous sampling instant, determine whether a time interval between an acquisition time of the average acceleration data of the previous sampling instant and an acquisition time of the average acceleration data of the current sampling instant is within a preset time range. In a case where the time interval between the acquisition time of the average acceleration data of the previous sampling instant and the acquisition time of the average acceleration data of the current sampling instant is within the preset time range, the detection module described above may further be specifically configured to detect whether a first difference value between the maximum acceleration among original acceleration data corresponding to the average acceleration data of the current sampling instant and the average acceleration data of the current sampling instant is larger than a first preset difference value, and detect whether a second difference value between the average acceleration data of the current sampling instant and the minimum acceleration among the original acceleration data corresponding to the average acceleration data of the current sampling instant is smaller than a second preset difference value. In a case where the first difference value is larger than the first preset difference value and the second difference value is smaller than the second preset difference value, the detection module described above may further be specifically configured to determine that the target object actually has the position movement. Through the process, whether the user walks one step can be determined more accurately.

In some embodiments, the various modules described above may be implemented by a processor in a mobile terminal.

A third embodiment of the present application provides a real-time off-line indoor map positioning method. The method performs real-time off-line accurate positioning and moving trajectory drawing for a pedestrian (a person is taken as an example in the embodiment) indoors by processing data acquired by a sensor built in a smart phone, thereby achieving low-cost, low-power consumption and high-precision indoor positioning.

The embodiment adopts the technical solution including the steps described below.

(1) In a step of identifying a pedestrian gait, acceleration data of a pedestrian during walking is acquired according to a three-axis accelerometer built in the smart phone and is smoothed, each step of the pedestrian is accurately identified through a double sliding time window average algorithm, and the occurrence time of each step of the pedestrian is recorded. Here, every step of the pedestrian may be understood as a movement of the target object, and/or a movement within a preset duration.

(2) In a step of estimating a pedestrian step size, the step size model of the current pedestrian is trained in an off-line stage according to different acceleration characteristic data generated by different pedestrians, so that the step size of the current pedestrian at each instant is estimated in real time according to the step size model corresponding to the current pedestrian.

(3) In a step of determining a pedestrian heading angle, the walking direction of each step of the pedestrian is obtained according to a direction sensor (i.e., an electronic compass) of the smart phone.

(4) In a step of positioning the pedestrian in real-time and drawing the moving trajectory, the position coordinate of the pedestrian at each instant is calculated according to the position coordinate, the step size and the heading angle data of each step of the pedestrian at the initial instant, that is, the real-time positioning of the pedestrian is completed, and thereby the position coordinate of the pedestrian at each instant from the starting time to the ending time can be connected to obtain the moving trajectory of the pedestrian.

Optionally, the pedestrian gait identification step may include the following process.

In step A, a mobile phone three-dimensional coordinate system is established for a built-in three-axis sensor of the mobile phone, where the measured sensor data is relative to the three-dimensional coordinate system.

In step B, the collected three-axis acceleration data in the smart phone is processed, and the overall acceleration is calculated, that is, $a = \sqrt{a_x^2 + a_y^2 + a_z^2}$

, where $a$ is the overall acceleration, $a_x$ is the acceleration in the x-axis of the smart phone, $a_y$ is the acceleration in the y-axis, and $a_z$ is the acceleration in the z-axis.

In step C, in a walking process of the pedestrian, each walking step corresponds to an instant, and sliding time window average filtering is performed on acceleration data generated by the pedestrian during walking so as to remove some noise.

In step D, according to acceleration data generated from walking of the pedestrian, the double sliding time window average algorithm is used to determine whether the pedestrian has taken a possible step.

In step E, on the basis that the pedestrian has taken a possible step in step D, it is determined whether the pedestrian really takes one step according to the walking period of the pedestrian and whether the maximum acceleration value and the minimum acceleration value in one step meet a preset threshold value range, and if the pedestrian is detected to have taken one step, the occurrence time of each step of the pedestrian is recorded, thereby finishing pedestrian gait identification.

Optionally, the step of estimating the pedestrian step size may include the following process.

In step F, the pedestrian step size model $L_k = b + cf(k) + dv + \delta$ is established, where $L_k$ is a real-time step size of the pedestrian at the k-th instant, $f(k)$ is the step frequency of this step of the pedestrian, $v$ is a variance of acceleration data generated in this step by the pedestrian, $b$ is a constant, c and $d$ are parameter values of corresponding variables, $b,$ c and $d$ can be obtained from training different pedestrians, and $\delta$ is model system noise and may generally be set as $\delta = 0$.

In step G, after a pedestrian step size model is established, off-line training needs to be performed for a pedestrian to obtain parameter values in the model. When off-line training is performed to collect data, the distance traveled by the user is specified, the user is required to walk at different walking speeds, the number of training walks is n, the walking time and the number of steps of the user are measured each time, the interval and variance of each step are recorded, the average step size is obtained by dividing the distance by the number of steps, the average value of frequencies and the average value of variances in all steps of the pedestrian in all measurements are taken as the frequency and the variance of the measurement, so that $n$ step size samples $\{L_1, L_2,...,L_n\}$ , n frequency samples $\{f_1, f_2,...,f_n\}$ and $n$ variance samples $\{v_1, v_2,...,v_n\}$ are obtained, and the step size models of different pedestrians can be obtained by performing linear fitting on the n samples, so that the step sizes of different pedestrians at different instants can be estimated in real time during positioning. For different training subjects, the step size of any training subject can be estimated with the step size model described above.

Optionally, the step of determining the pedestrian heading angle may include the following process.

In step H, the included angle between the horizontal projection in the y-axial direction of the mobile phone on the horizontal plane in the geographic coordinate system and the magnetic north direction is obtained through a direction sensor, i.e., an electronic compass, of the smart phone, so that the direction angle of the pedestrian relative to the magnetic north is obtained.

In step I, the local magnetic declination of the pedestrian is obtained through table lookup.

In step J, at the ending time when it is determined through pedestrian gait identification that the pedestrian really walks one step, a real-time heading angle of the pedestrian is obtained according to calculation of $\theta_k = \beta_k - \varepsilon$ , where $\theta_k$ is the heading angle of the step of the pedestrian, $\beta_k$ is the direction angle of the pedestrian relative to the magnetic north measured by the direction sensor of the mobile phone at the ending time of the step, and $\varepsilon$ is a local magnetic declination.

Optionally, in the pedestrian real-time positioning and moving trajectory drawing step, the following process may be included.

In step K, the indoor plan view of the place where the pedestrian is located is displayed on the mobile phone in a certain proportion, and coordinates $(x_0, y_0)$ of the initial position of the pedestrian are obtained.

In step L, the position $(x_k, y_k)$ of the pedestrian at any instant $k$ is calculated as

$$(x_0 + \sum_{i=1}^{k} L_i \sin \theta_i, \, y_0 + \sum_{i=1}^{k} L_i \cos \theta_i)$$

according to the position of the pedestrian at the initial instant and the step size and heading angle of each step from the initial instant to the instant k, thus completing the real-time positioning of the pedestrian.

In step M, the positions of the pedestrian at all instants are connected and drew on the terminal map in proportion, thus completing the drawing of the moving trajectory of the pedestrian.

In some embodiments, in step C, the sliding time window average filtering is performed on acceleration data of the pedestrian in the following manner.

In step C1, for the acceleration data collected in the walking process of the pedestrian, each acceleration collected by the accelerometer corresponds to an instant, and the acceleration value of the instant $i$ is defined as $a_i = (a_{i-1} + a_i)/2$, where $a_i$ is the acceleration value of the instant $i$.

In step C2, the sliding time average filtering is

$$a_i = \frac{\sum a_j * l_j}{\sum l_j}$$

performed, according to the formula , on acceleration data collected at each instant, and j is the time of the first n measured acceleration values closest to i and satisfies $\Sigma l_j < t,$ where $t$ is the size (duration) of a preset sliding time window, i.e., the time range adjacent to the instant $i$, and $l_j$ is the time interval between the instant j and the instant $j$-1.

In some embodiments, in step D, the double sliding time window average algorithm is used to determine whether the pedestrian has taken a possible step in the following manner.

In step D1, a long time window and a short time window are separately used for performing sliding average on the original acceleration data, i.e., the preset duration of one sliding time window is a little longer, the preset duration of the other sliding time window is a little shorter, and the sizes (e.g., durations) of the two windows are determined through training, so that the real peak of the original acceleration data is located at the intersection point of the acceleration data subjected to average of the two sliding windows.

In step D2, after the acceleration data is averaged according to the preset two sliding time windows, two monitoring quantities oldSwapState and newSwapState are set for separately representing a state of the magnitude comparison of the acceleration value $a_1$ obtained by averaging two adjacent detected acceleration data through the long sliding time window with the acceleration value $a_s$ obtained by averaging two adjacent detected acceleration data through the short sliding time window. If $a_s > a_l$ at the current time point when the acceleration data is detected, newSwapState is set to true, otherwise, newSwapState is set to false. oldSwapState is a state of the magnitude comparison of $a_l$ and $a_s$ at the previous time point when acceleration data was detected. If values of oldSwapState and newSwapState are different and newSwapState is true, it indicates that a possible step is detected, and the process goes to step E; otherwise, the value of newSwapState is assigned to oldSwapState to update oldSwapState, and $a_l$ and $a_s$ at the next instant continue to be compared in magnitude.

In some embodiments, in step E, it is determined whether the pedestrian actually takes one step in the following manner: on the basis that it is detected in step D2 that a pedestrian may take one step, if the following three conditions are satisfied, it indicates that the pedestrian actually takes one step and the time at the instant is recorded; otherwise, the pedestrian is not detected to take one step. The three conditions are as follows: (1) The time interval between the previous detection of a possible step and the current detection of a possible step is 0.2s to 2s; (2) In the process of detecting a possible step, the difference between the maximum acceleration value among the original acceleration data and the current acceleration value averaged over the long sliding time window is larger than 0.2; (3) The difference between the current acceleration value averaged over the long sliding time window and the minimum acceleration value among the original acceleration data is greater than 0.7.

In some embodiments, in step F, the step frequency $f(k)$ for each step of the pedestrian is calculated by the formula

$$f(k) = \frac{1}{t_k - t_{k-1}}$$

, where $t_k$ is the instant at which a step of the pedestrian is currently detected and $t_{k-1}$ is the instant at which a step of the pedestrian was last detected.

In some embodiments, in step F, the variance v of the acceleration data generated by the pedestrian in each step may be calculated by the formula $v = E(a_k^2)-(E(a_k))^2$, where $a_k$ is all acceleration data obtained in a step of the pedestrian, $E(a_k)$ is the expectation of the acceleration data generated in the step of the pedestrian, and $E(a_k^2)$ is the expectation of the square of the acceleration data generated in the step of the pedestrian.

An embodiment of the present application provides a real-time off-line indoor positioning mechanism and system. The mechanism and system adopts a double sliding time window average algorithm to perform pedestrian gait identification, which has high accuracy and improves the stability of pedestrian gait identification.

An embodiment of the present application provides a real-time off-line indoor positioning mechanism and system. The mechanism and system do not depend on a satellite, a network or an external device and merely depend on an acceleration sensor and a direction sensor which are built in a widely popularized smart phone to implement off-line real-time positioning, with low cost, high positioning accuracy, good practicability and strong popularization.

An embodiment of the present application provides a real-time off-line indoor positioning mechanism and system, which can solve the problem that accurate positioning of a pedestrian is difficult in the indoor environment without network at present.

An embodiment of the present application provides a real-time offline indoor positioning mechanism and system which can be fused with other positioning solutions to implement positioning with higher accuracy.

An embodiment of the present application further provides a positioning method, and the problem of the existing art to be solved by the method is that a pedestrian cannot be positioned off-line in real time in an indoor environment without network. According to the real-time off-line indoor positioning method provided by the embodiments of the present application, stable and accurate pedestrian gait identification is achieved through a double sliding time window average algorithm, accurate and real-time step size estimation of a pedestrian is completed through a trained pedestrian step size model, and a real-time heading angle of the pedestrian is determined through a direction sensor of a smart phone. In this way, under the condition that the initial position of the pedestrian is known, real-time off-line positioning and moving trajectory drawing of the pedestrian indoors are achieved, and the existing problem that accurate positioning of the pedestrian is difficult to achieve in an indoor environment without network can be solved, meanwhile, the mechanism does not depend on a satellite, a network or an external device and merely depends on an acceleration sensor and a direction sensor which are built in a widely popularized smart phone to implement off-line real-time positioning, with low cost, high positioning accuracy, good practicability and strong popularization.

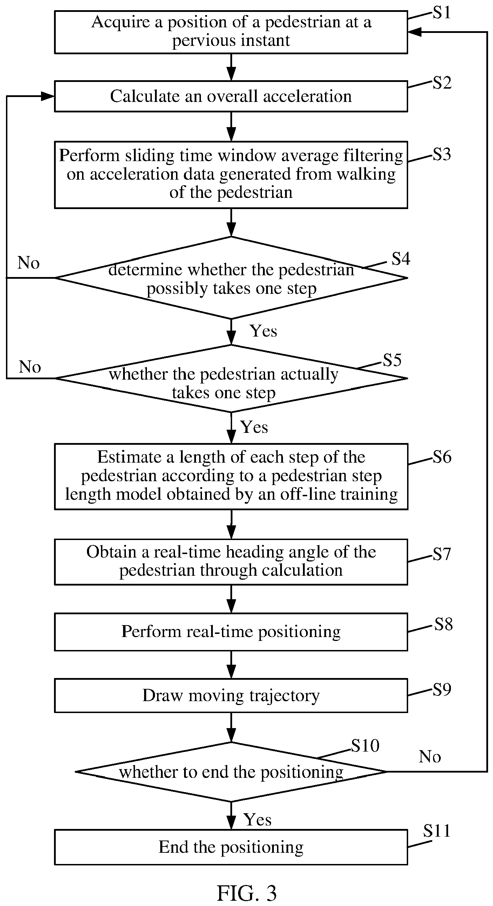

FIG. 3 shows a flowchart of a real-time off-line indoor positioning method when the present embodiment is applied to a smart terminal for indoor positioning. Steps of the present embodiment will be described below in detail with reference to FIG. 3.

In step S1, an indoor map of a place where a pedestrian is located is displayed on a smart terminal in a certain proportion, and a position of the pedestrian at a previous instant is acquired. If the positioning is just started, coordinates of the initial position of the pedestrian are acquired through manual setting of the pedestrian or other positioning methods.

Before the step S1, the pedestrian step size model $L_k = b + cf(k) + dv + \delta$ needs to be established, where $L_k$ is a real-time step size of the pedestrian at the k-th instant, $f(k)$ is the step frequency of this step of the pedestrian, $v$ is a variance of acceleration data generated in this step by the pedestrian, $b$ is a constant, c and $d$ are parameter values of corresponding variables, $lb$, c and $d$ can be obtained from training different pedestrians, and $\delta$ is model system noise and generally be set as $\delta = 0$.

After a pedestrian step size model is established, off-line training is performed on a pedestrian to obtain parameter values in the model. When off-line training is performed to collect data, the distance traveled by the user is specified, the user is required to walk at different walking speeds, the number of training walks is n, the walking time and the number of steps of the user is measured each time, the interval and variance of each step are recorded, distance divided by the number of steps is the average step size, the average value of frequencies and the average value of variances in all steps of the pedestrian in all measurements are respectively taken as the frequency and the variance of the measurement, so that $n$ step size samples $\{L_1, L_2, ..., L_n\}$, n frequency samples $\{f_1, f_2, ..., f_n\}$ and $n$ variance samples $\{v_1, v_2, ..., v_n\}$ are obtained. The step size models of different pedestrians can be obtained by performing linear fitting on the n samples, so that the step sizes of different pedestrians at different instants can be estimated in real time during positioning. The step frequency $f(k)$ for each step of the pedestrian is calculated by the formula

$$f(k) = \frac{1}{t_k - t_{k-1}}$$

, where $t_k$ is the instant at which a step of the pedestrian is currently detected and $t_{k-1}$ is the instant at which the last step of the pedestrian is detected. The variance v of the acceleration data generated by the pedestrian in each step may be calculated by the formula $v = E(a_k^2) - (E(a_k))^2$, where $a_k$ is all acceleration data obtained in a step of the pedestrian, $E(a_k)$ is the expectation of the acceleration data generated in the step of the pedestrian, and $E(a_k^2)$ is the expectation of the square of the acceleration data generated in the step of the pedestrian.

In step S2, the overall acceleration is calculated, for example, a mobile phone three-dimensional coordinate system is established for a built-in three-axis sensor of the mobile phone, where the measured sensor data is relative to the three-dimensional coordinate system; the collected three-axis acceleration data in the smart phone is processed, and the overall acceleration is calculated, that is, $a = \sqrt{a_x^2 + a_y^2 + a_z^2}$, where $a$ is the overall acceleration, $a_x$ is the acceleration in the x-axis of the smart phone, $a_y$ is the acceleration in the y-axis, and $a_z$ is the acceleration in the z-axis.

In step S3, in a walking process of the pedestrian, each walking step corresponds to an instant, and sliding time window average filtering is performed on acceleration data generated by the pedestrian during walking so as to remove some noise. The step S3 may include step S31 and step S32.

In step S31, for the acceleration data collected in the walking process of the pedestrian, the acceleration each time collected by the accelerometer corresponds to an instant, and the acceleration value of the instant $i$ is defined as $a_i = (a_{i-1} + a_i)/2$, where $a_i$ is the acceleration value of the instant $i$.

In step S32, the sliding time average filtering is performed, according to the formula $a_i = \frac{\sum a_j * l_j}{\sum l_j}$, on acceleration data collected at each instant, and j is the first n instants, on which acceleration values are measured, closest to $i$ and satisfies $\Sigma l_j < t$, where $t$ is the size (duration) of a preset sliding time window, i.e., the time range adjacent to the instant $i$, and $l_j$ is the time interval between the instant j and the instant $j$-1.

In step S4, according to acceleration data generated from walking of the pedestrian, the double sliding time window average algorithm is used to determine whether the pedestrian has taken a possible step. The step S4 may include step S41 and step S42.

In step S41, a long time window and a short time window are separately used for performing sliding average on the original acceleration data, i.e., the preset duration of one sliding time window is a little longer, the preset duration of the other sliding time window is a little shorter, and the sizes (e.g., durations) of the two windows are determined through training, so that the real peak of the original acceleration data is located at the intersection point of the acceleration data subjected to average of the two sliding windows. Through repeated experimental comparison, the long window size may be set as 1s, the short window size may be set as 0.2s, and the above requirements can be satisfied.

In step S42, after the acceleration data is averaged according to the preset two sliding time windows, two monitoring quantities oldSwapState and newSwapState are set for separately representing a state of the magnitude comparison of the acceleration value $a_l$ obtained by averaging two adjacent detected acceleration data through the long sliding time window with the acceleration value $a_s$ obtained by averaging two adjacent detected acceleration data through the short sliding time window. If $a_s > a_l$ at the current time point when the acceleration data is detected, newSwapState is set to true, otherwise, newSwapState is set to false. oldSwapState is a state of the magnitude comparison of $a_l$ with $a_s$ at the previous time point when acceleration data was detected. If values of oldSwapState and newSwapState are different and newSwapState is true, it indicates that a possible step is detected, and the process goes to step E; otherwise, the value of newSwapState is assigned to oldSwapState to update oldSwapState, and $a_l$ and $a_s$ at the next instant continue to be compared in magnitude.

In step S5, on the basis of determining that the pedestrian has taken a possible step in step S4, it is determined whether the pedestrian actually takes one step according to the walking period of the pedestrian and whether the maximum acceleration value and the minimum acceleration value in one step meet a preset threshold value range. If the pedestrian is detected to have taken one step, step 6 is performed. The step S5 specifically includes steps S51, S52, S53 and S54.

In step S51, it is detected whether the time interval between the previous detection of a possible step and the current detection of a possible step is greater than 0.2s. If the time interval between the previous detection of a possible step and the current detection of a possible step is greater than 0.2s, the process goes to step S52; if the time interval between the previous detection of a possible step and the current detection of a possible step is not greater than 0.2s, it indicates that the pedestrian has not taken one step, and the process goes to the wait for a start of step 5 again.

In step S52, it is detected whether the time interval between the previous detection of a possible step and the current detection of a possible step is smaller than 0.2s. If the time interval between the previous detection of a possible step and the current detection of a possible step is smaller than 0.2s, the process goes to step S53; if the time interval between the previous detection of a possible step and the current detection of a possible step is not smaller than 0.2s, it indicates that the pedestrian has not taken one step, and the process goes to the wait for a start of step 5 again.

In step S53, it is detected whether the difference between the maximum acceleration value among the original acceleration data in the possible step and the current acceleration value subjected to average through the long sliding time window is greater than 0.2. If the difference is greater than 0.2, the process goes to step S54; if the difference is not greater than 0.2, it indicates that the pedestrian has not taken one step, and the process goes to the wait for a start of step 5 again.

In step S54, it is detected whether the difference between the current acceleration value subjected to average through the long sliding time window and the minimum acceleration value among the original acceleration data in the possible step is greater than 0.7. If the difference is greater than 0.7, it indicates that the pedestrian actually takes one step, and the time of the one step is recorded; if the difference is not greater than 0.7, it indicates that the pedestrian has not taken one step, and the process goes to the wait for a start of step 5 again.

In step S6, on the basis of identifying one step of the pedestrian in step S5, the step size of each step of the pedestrian is estimated according to the off-line trained pedestrian step size model.

In step S7, a real-time deviation angle is obtained through calculation, and the step may include the following steps: at the ending time when it is determined through pedestrian gait identification that the pedestrian really walks one step, the included angle between the horizontal projection in the *y*-axial direction of the mobile phone on the horizontal plane in the geographic coordinate system and the magnetic north direction is obtained through a direction sensor, i.e., an electronic compass, of the smart phone, so that the direction angle of the pedestrian relative to the magnetic north is obtained; the local magnetic declination of the pedestrian is obtained through table lookup in advance; a real-time heading angle of the pedestrian is obtained according to calculation of $\theta_k = \beta_k - \varepsilon$, where $\theta_k$ is the heading angle of the step of the pedestrian, $\beta_k$ is the direction angle of the pedestrian relative to the magnetic north measured by the direction sensor of the mobile phone at the ending time of the step, and $\varepsilon$ is a local magnetic declination.

In step S8, real-time positioning is performed, and the position $(x_k, y_k)$ of the pedestrian at any instant $k$

$$(x_0 + \sum_{i=1}^{k} L_i \sin\theta_i, \; y_0 + \sum_{i=1}^{k} L_i \cos\theta_i)$$

is calculated as according to the position $(x_0, y_0)$ of the pedestrian at the initial instant and the step size and heading angle of each step from the initial instant to the instant k, thus completing the real-time positioning of the pedestrian. The real-time positioning in the present embodiment may include: periodic positioning at predetermined time intervals, where it should be noted that the time interval is small enough so that it can be referred to as real-time positioning.

In step S9, the positions of the pedestrian at all instants are connected and drew on the smart terminal map in proportion, thus completing the drawing of the moving trajectory of the pedestrian.

In step S10, whether the positioning is ended is determined. If the positioning is not ended, the process returns to step S1; if the positioning is ended, step S11 is performed.

In S11, the positioning is ended.

According to the embodiments of the present application, a double sliding time window average algorithm is adopted for pedestrian gait identification, so that the accuracy is high, and the stability of pedestrian gait identification is improved; meanwhile, the present solution does not depend on a satellite, a network and an external device and merely depends on an acceleration sensor and a direction sensor built in a widely popularized smart mobile phone to achieve off-line real-time positioning. Accurate positioning service for the pedestrian in an indoor environment without network can be provided only with one smart mobile phone, which is low in cost, high in positioning accuracy, good in practicability and strong in popularization, and can be fused with other positioning solutions to achieve positioning with higher accuracy.

The present embodiment provides a mobile terminal which may be any mobile electronic device such as a portable device convenient for a user to carry or an electronic device such as a vehicle-mounted device.

The mobile terminal includes a memory and a processor.

The memory is configured to store information.

The processor is connected to the memory and configured to execute executable codes in the memory; the executable codes, when executed, are capable of implementing any of the positioning methods provided by the embodiments of the present application, e.g., the methods shown in FIG. 1 and/or FIG. 3.

The processor may be connected to the memory via a structure such as a bus within the mobile terminal. The processor may be a central processing unit, a microprocessor, a digital signal processor, a programmable array, an application specific integrated circuit, or the like.

An embodiment of the present application further provides a computer storage medium for storing computer-executable instructions, where after being executed, the computer-executable instructions are capable of implementing any of the positioning methods provided by the foregoing embodiments, e.g., the methods shown in FIG. 1 and/or FIG. 3.

The computer storage medium may be any type of storage medium such as an optical disk, a hard disk, a flash disk, a CD, a USB flash disk, or the like, optionally a non-transitory storage medium.

From the description of the above-mentioned embodiments, it will be apparent to those skilled in the art that the methods in the embodiments described above may be implemented by software plus a necessary general-purpose hardware platform, or may of course be implemented by hardware. However, in many cases, the former is a preferred implementation manner. Based on this understanding, the solutions provided by the present application substantially, or the part contributing to the existing art, may be embodied in the form of a software product. The computer software product is stored on a storage medium (such as a read-only memory (ROM)/random access memory (RAM), a magnetic disk or an optical disk) and includes several instructions for enabling a terminal device (which may be a mobile phone, a computer, a server, a network device or the like) to execute the methods according to the embodiments of the present application.

## Claims

1. A positioning method, comprising:

   determining (S102) an actual distance between a first position and a second position of a target object according to a preset model in response to determining that the target object actually displaced, and determining a heading angle corresponding to the actual distance according to a direction sensor, wherein the first position is a position corresponding to a current sampling instant, and the second position is a position at a previous sampling instant adjacent to the current sampling instant;
   determining (SI04) the first position of the target object according to a predetermined reference position, the actual distance and the heading angle, and taking the first position as a predetermined reference position for calculating a third position, wherein the third position is a position at a next sampling instant adjacent to the current sampling instant; and
   **characterized in that** before determining the actual distance between the first position and the second position of the target object according to the preset model, the method further comprises:

      acquiring accelerations in three direction axes of a three-dimensional coordinate system through a three-axis sensor, and determining a magnitude of an acceleration of the current sampling instant according to the accelerations in the three direction axes;
      obtaining first acceleration data by performing (S3) average filtering on the magnitude of the acceleration of the current sampling instant based on a first preset sliding time window, and obtaining second acceleration data by performing average filtering on the magnitude of the acceleration of the current sampling instant based on a second preset sliding time window, wherein a duration of the second preset sliding time window is shorter than a duration of the first preset sliding time window; and
      in response to the second acceleration data being larger than the first acceleration data, detecting whether the magnitude of the acceleration of the current sampling instant is the same as a magnitude of an acceleration of the previous sampling instant, and in a case where the magnitude of the acceleration of the current sampling instant is not the same as the magnitude of the acceleration of the previous sampling instant, determining that the target object actually displaced; and in response to the second acceleration data being smaller than or equal to the first acceleration data, updating the magnitude of the acceleration of the previous sampling instant with the magnitude of the acceleration of the current sampling instant.

2. The positioning method of claim 1, wherein after determining the actual distance between the first position and the second position of the target object according to the preset model, and determining the heading angle corresponding to the actual distance according to the direction sensor, the method further comprises:
connecting the predetermined reference position and the first position to draw a motion route.

3. The positioning method of claim 1, wherein in the case where the magnitude of the acceleration of the current sampling instant is not the same as the magnitude of the acceleration of the previous sampling instant, determining that the target object actually displaced comprises: whether a time interval between an acquisition time of the magnitude of the acceleration of the previous sampling instant and an acquisition time of the magnitude of the acceleration of the current sampling instant is within a preset time range; and
in a case where the time interval between the acquisition time of the magnitude of the acceleration of the previous sampling instant and the acquisition time of the magnitude of the acceleration of the current sampling instant is within the preset time range, detecting whether a first difference value between a maximum acceleration among original acceleration data corresponding to the magnitude of the acceleration of the current sampling instant and the magnitude of the acceleration of the current sampling instant is larger than a first preset difference value, and detecting whether a second difference value between the magnitude of the acceleration of the current sampling instant and a minimum acceleration among the original acceleration data corresponding to the magnitude of the acceleration of the current sampling instant is smaller than a second preset difference value; and in a case where the first difference value is larger than the first preset difference value and the second difference value is smaller than the second preset difference value, determining that the target object actually displaced.

4. The positioning method of any one of claims 1 to 3, wherein in response to the preset model is a preset pedestrian step size model, the preset pedestrian step size model is:
$L_k = b + cf(k) + dv + \delta$, wherein $L_k$ is an actual distance of the target object at a k-th instant, $f(k)$ is a moving frequency of the target object at the current sampling instant, $v$ is a variance of acceleration data generated by the target object at the current sampling instant, $b$ is a constant, c and $d$ are parameter values of corresponding variables respectively, $b$, c and $d$ are obtained from training the target object, and $\delta$ is model system noise.

5. A positioning apparatus, comprising:

a first determination module (10), which is configured to determine an actual distance between a first position and a second position of a target object according to a preset model in response to determining that the target object actually displaced, and determine a heading angle corresponding to the actual distance according to a direction sensor, wherein the first position is a position corresponding to a current sampling instant, and the second position is a position at a previous sampling instant adjacent to the current sampling instant; and
a positioning module (11), which is configured to determine the first position of the target object according to a predetermined reference position, the actual distance and the heading angle, and take the first position as a predetermined reference position for calculating a third position, wherein the third position is a position at a next sampling instant adjacent to the current sampling instant;
**characterized in that** the positioning apparatus further comprises:

a second determination module, which is configured to acquire accelerations in three direction axes of a three-dimensional coordinate system through a three-axis sensor, and determine a magnitude of an acceleration of the current sampling instant according to the accelerations in the three direction axes; and obtain first acceleration data by performing average filtering on the magnitude of the acceleration of the current sampling instant based on a first preset sliding time window, and obtain second acceleration data by performing average filtering on the magnitude of the acceleration of the current sampling instant based on a second preset sliding time window, wherein a duration of the second preset sliding time window is shorter than a duration of the first preset sliding time window;

a detection module, which is configured to: in response to the second acceleration data being larger than the first acceleration data, detect whether the magnitude of the acceleration of the current sampling instant is same as a magnitude of an acceleration of the previous sampling instant, and in a case where the magnitude of the acceleration of the current sampling instant is not the same as the magnitude of the acceleration of the previous sampling instant, determine that the target object actually displaced; and

an update module, which is configured to: in response to the second acceleration data being smaller than or equal to the first acceleration data, update the magnitude of the acceleration of the previous sampling instant with the magnitude of the acceleration of the current sampling instant.

6. The positioning apparatus of claim 5, further comprising: a drawing module, which is configured to connect the predetermined reference position and the first position to draw a motion route.

7. The positioning apparatus of claim 5, wherein the detection module is configured to:

in the case where the magnitude of the acceleration of the current sampling instant is not the same as the magnitude of the acceleration of the previous sampling instant, detect whether a time interval between an acquisition time of the magnitude of the acceleration of the previous sampling instant and an acquisition time of the magnitude of the acceleration of the current sampling instant is within a preset time range;

in a case where the time interval between the acquisition time of the magnitude of the acceleration of the previous sampling instant and the acquisition time of the magnitude of the acceleration of the current sampling instant is within the preset time range, detect whether a first difference value between a maximum acceleration among original acceleration data corresponding to the magnitude of the acceleration of the current sampling instant and the magnitude of the acceleration of the current sampling instant is larger than a first preset difference value, and detect whether a second difference value between the magnitude of the acceleration of the current sampling instant and a minimum acceleration among the original acceleration data corresponding to the magnitude of the acceleration of the current sampling instant is smaller than a second preset difference value; and

in a case where the first difference value is larger than the first preset difference value and the second difference value is smaller than the second preset difference value, determine that the target object actually displaced.

8. The positioning apparatus of any one of claims 5 to 7, wherein in response to the preset model is a preset pedestrian step size model, the preset pedestrian step size model used by the first determination module (10) is:

$L_k = b+cf(k)+dv+\delta$, wherein $L_k$ is an actual distance of the target object at a k-th instant, $f(k)$ is a moving frequency of the target object at the current sampling instant, $v$ is a variance of acceleration data generated by the target object at the current sampling instant, $b$ is a constant, c and $d$ are parameter values of corresponding variables respectively, $b$, c and $d$ are obtained from training the target object, and $\delta$ is model system noise.

9. A mobile terminal, comprising the positioning apparatus of any one of claims 5 to 8.

10. A computer storage medium storing computer-executable instructions, wherein upon being executed, the computer-executable instructions are capable of implementing the method of any one of claims 1 to 4.

**Patentansprüche**

1. Positionsbestimmungsverfahren, das Folgendes umfasst:

Bestimmen (S102) eines tatsächlichen Abstands zwischen einer ersten Position und einer zweiten Position eines Zielobjekts gemäß einem voreingestellten Modell in Reaktion auf das Bestimmen, dass das Zielobjekt tatsächlich versetzt wurde, und Bestimmen eines Kurswinkels, der dem tatsächlichen Abstand entspricht, gemäß einem Richtungssensor, wobei die erste Position eine Position ist, die einer aktuellen Abtastinstanz entspricht, und die zweite Position eine Position an einer vorherigen Abtastinstanz ist, die der aktuellen Abtastinstanz benachbart ist;

Bestimmen (S104) der ersten Position des Zielobjekts gemäß einer vorbestimmten Referenzposition, dem tatsächlichen Abstand und dem Kurswinkel und Übernehmen der ersten Position als eine vorbestimmte Referenzposition zum Berechnen einer dritten Position, wobei die dritte Position eine Position bei einer nächsten Abtastinstanz ist, die der aktuellen Abtastinstanz benachbart ist; und

**dadurch gekennzeichnet, dass** das Verfahren vor dem Bestimmen des tatsächlichen Abstands zwischen der ersten Position und der zweiten Position des Zielobjekts gemäß dem voreingestellten Modell ferner Folgendes umfasst:

Erfassen von Beschleunigungen in drei Richtungsachsen eines dreidimensionalen Koordinatensystems über einen Dreiachsensensor und Bestimmen einer Größe einer Beschleunigung der aktuellen Abtastinstanz gemäß den Beschleunigungen in den drei Richtungsachsen;

Erhalten von ersten Beschleunigungsdaten durch Durchführen (S3) einer Mittelwertfilterung an der Größe der Beschleunigung der aktuellen Abtastinstanz auf Basis eines voreingestellten gleitenden Zeitfensters und Erhalten von zweiten Beschleunigungsdaten durch Durchführen einer Mittelwertfilterung an der Größe der Beschleunigung der aktuellen Abtastinstanz auf Basis eines zweiten voreingestellten gleitenden Zeitfensters, wobei eine Dauer des zweiten voreingestellten gleitenden Zeitfensters kürzer ist als eine Dauer des ersten voreingestellten gleitenden Zeitfensters; und

in Reaktion darauf, dass die zweiten Beschleunigungsdaten größer sind als die ersten Beschleunigungsdaten, Detektieren, ob die Größe der Beschleunigung der aktuellen Abtastinstanz dieselbe ist wie eine Größe einer Beschleunigung der vorherigen Abtastinstanz, und in einem Fall, in dem die Größe der Beschleunigung der aktuellen Abtastinstanz nicht dieselbe ist wie die Größe der Beschleunigung der vorherigen Abtastinstanz, Bestimmen, dass das Zielobjekt tatsächlich versetzt wurde; und in Reaktion darauf, dass die zweiten Beschleunigungsdaten kleiner als oder gleich den ersten Beschleunigungsdaten sind, Aktualisieren der Größe der Beschleunigung der vorherigen Abtastinstanz mit der Größe der Beschleunigung der aktuellen Abtastinstanz.

2. Positionsbestimmungsverfahren nach Anspruch 1, wobei das Verfahren nach dem Bestimmen des tatsächlichen Abstands zwischen der ersten Position und der zweiten Position des Zielobjekts gemäß dem voreingestellten Modell und Bestimmen des Kurswinkels, der dem tatsächlichen Abstand entspricht, gemäß dem Richtungssensor ferner Folgendes umfasst:

Verbinden der vorbestimmten Referenzposition und der ersten Position, um eine Bewegungsroute zu zeichnen.

3. Positionsbestimmungsverfahren nach Anspruch 1, wobei in dem Fall, in dem die Größe der Beschleunigung der aktuellen Abtastinstanz nicht dieselbe ist wie die Größe der Beschleunigung der vorherigen Abtastinstanz, das Bestimmen, dass das Zielobjekt tatsächlich versetzt wurde, Folgendes umfasst:

Detektieren, ob ein Zeitintervall zwischen einer Erfassungszeit der Größe der Beschleunigung der vorherigen Abtastinstanz und einer Erfassungszeit der Größe der Beschleunigung der aktuellen Abtastinstanz innerhalb einer voreingestellten Zeitspannen liegt; und

in einem Fall, in dem das Zeitintervall zwischen der Erfassungszeit der Größe der Beschleunigung der vorherigen Abtastinstanz und der Erfassungszeit der Größe der Beschleunigung der aktuellen Abtastinstanz innerhalb der voreingestellten Zeitspanne liegt, Detektieren, ob ein zweiter Differenzwert zwischen einer maximalen Beschleunigung bei ursprünglichen Beschleunigungsdaten, die der Größe der Beschleunigung der aktuellen Abtastinstanz entspricht, und der Größe der Beschleunigung der aktuellen Abtastinstanz größer ist als ein erster voreingestellter Wert, und Detektieren, ob ein zweiter Differenzwert zwischen der Größe der Beschleunigung der aktuellen Abtastinstanz und einer minimalen Beschleunigung bei den ursprünglichen Beschleunigungsdaten, die der Größe der Beschleunigung der aktuellen Abtastinstanz entspricht, und der Größe der Beschleunigung der aktuellen Abtastinstanz kleiner ist als ein zweiter voreingestellter Differenzwert; und in einem Fall, in dem der erste Differenzwert größer ist als der erste voreingestellte Differenzwert und der zweite Differenzwert kleiner ist als der zweite voreingestellte Differenzwert, Bestimmen, dass das Zielobjekt tatsächlich versetzt wurde.

4. Positionsbestimmungsverfahren nach einem der Ansprüche 1 bis 3, wobei in Reaktion darauf, dass das voreingestellte Modell ein Modell für eine voreingestellte Größe eines Fußgängerschritts ist, das Modell für eine voreingestellte Größe eines Fußgängerschritts Folgendes ist:

$L_k = b + cf(k) + dv + \delta$, wobei $L_k$ ein tatsächlicher Abstand des Zielobjekts in der k-ten Instanz ist, $f(k)$ eine Bewegungsfrequenz des Zielobjekts in der aktuellen Abtastinstanz ist, $v$ eine Varianz von Beschleunigungsdaten ist, die vom Zielobjekt in der aktuellen Abtastinstanz erzeugt wird, $b$ eine Konstante ist, $c$ bzw. $d$ Parameterwerte von entsprechenden Variablen sind, $b$, $c$ und $d$ aus dem Trainieren des Zielobjekts erhalten werden und $\delta$ ein Modellsystemrauschen ist.

5. Positionsbestimmungsvorrichtung, die Folgendes umfasst:

ein erstes Bestimmungsmodul (10), das dazu ausgelegt ist, in Reaktion auf das Bestimmen, dass das Zielobjekt tatsächlich versetzt wurde, einen tatsächlichen Abstand zwischen einer ersten Position und einer zweiten Position eines Zielobjekts gemäß einem voreingestellten Modell zu bestimmen und einen Kurswinkel, der dem tatsächlichen Abstand entspricht, gemäß einem Richtungssensor zu bestimmen, wobei die erste Position eine Position ist, die einer aktuellen Abtastinstanz entspricht, und die zweite Position eine Position an einer vorherigen Abtastinstanz ist, die der aktuellen Abtastinstanz benachbart ist; und

ein Positionsbestimmungsmodul (11), das dazu ausgelegt ist, die erste Position des Zielobjekts gemäß einer vorbestimmten Referenzposition, dem tatsächlichen Abstand und dem Kurswinkel zu bestimmen und die erste Position als eine vorbestimmte Referenzposition zum Berechnen einer dritten Position zu übernehmen, wobei die dritte Position eine Position bei einer nächsten Abtastinstanz ist, die der aktuellen Abtastinstanz benachbart ist;

**dadurch gekennzeichnet, dass** die Positionsbestimmungsvorrichtung ferner Folgendes umfasst:

ein zweites Bestimmungsmodul, das dazu ausgelegt ist, über einen Dreiachsensensor Beschleunigungen in drei Richtungsachsen eines dreidimensionalen Koordinatensystems zu erfassen und eine Größe einer Beschleunigung der aktuellen Abtastinstanz gemäß den Beschleunigungen in den drei Richtungsachsen zu bestimmen und durch Durchführen einer Mittelwertfilterung an der Größe der Beschleunigung der aktuellen Abtastinstanz auf Basis eines voreingestellten gleitenden Zeitfensters erste Beschleunigungsdaten zu erhalten und durch Durchführen einer Mittelwertfilterung an der Größe der Beschleunigung der aktuellen Abtastinstanz auf Basis eines zweiten voreingestellten gleitenden Zeitfensters zweite Beschleunigungsdaten zu erhalten, wobei eine Dauer des zweiten voreingestellten gleitenden Zeitfensters kürzer ist als eine Dauer des ersten voreingestellten gleitenden Zeitfensters;

ein Detektionsmodul, das zu Folgendem ausgelegt ist: in Reaktion darauf, dass die zweiten Beschleunigungsdaten größer sind als die ersten Beschleunigungsdaten, Detektieren, ob die Größe der Beschleunigung der aktuellen Abtastinstanz dieselbe ist wie eine Größe einer Beschleunigung der vorherigen Abtastinstanz, und in einem Fall, in dem die Größe der Beschleunigung der aktuellen Abtastinstanz nicht dieselbe ist wie die Größe der Beschleunigung der vorherigen Abtastinstanz, Bestimmen, dass das Zielobjekt tatsächlich versetzt wurde; und

ein Aktualisierungsmodul, das zu Folgendem ausgelegt ist: in Reaktion darauf, dass die zweiten Beschleunigungsdaten kleiner als oder gleich den ersten Beschleunigungsdaten ist, Aktualisieren der Größe der Beschleunigung der vorherigen Abtastinstanz mit der Größe der Beschleunigung der aktuellen Abtastinstanz.

6. Positionsbestimmungsvorrichtung nach Anspruch 5, das ferner Folgendes umfasst: ein Zeichenmodul, das dazu ausgelegt ist, die vorbestimmte Referenzposition und die erste Position zu verbinden, um eine Bewegungsroute zu zeichnen.

7. Positionsbestimmungsvorrichtung nach Anspruch 5, wobei das Detektionsmodul zu Folgendem ausgelegt ist:

in dem Fall, in dem die Größe der Beschleunigung der aktuellen Abtastinstanz nicht dieselbe ist wie die Größe der Beschleunigung der vorherigen Abtastinstanz, Detektieren, ob ein Zeitintervall zwischen einer Erfassungszeit der Größe der Beschleunigung der vorherigen Abtastinstanz und einer Erfassungszeit der Größe der Beschleunigung der aktuellen Abtastinstanz innerhalb einer voreingestellten Zeitspanne liegt;

in einem Fall, in dem das Zeitintervall zwischen der Erfassungszeit der Größe der Beschleunigung der vorherigen Abtastinstanz und der Erfassungszeit der Größe der Beschleunigung der aktuellen Abtastinstanz innerhalb der voreingestellten Zeitspanne liegt, Detektieren, ob ein zweiter Differenzwert zwischen einer maximalen Beschleunigung bei ursprünglichen Beschleunigungsdaten, die der Größe der Beschleunigung der aktuellen Abtastinstanz entspricht, und der Größe der Beschleunigung der aktuellen Abtastinstanz größer ist als ein erster voreingestellter Wert, und Detektieren, ob ein zweiter Differenzwert zwischen der Größe der Beschleunigung der aktuellen Abtastinstanz und einer minimalen Beschleunigung bei den ursprünglichen Beschleunigungsdaten, die der Größe der Beschleunigung der aktuellen Abtastinstanz entspricht, und der Größe der Beschleunigung der aktuellen Abtastinstanz kleiner ist als ein zweiter voreingestellter Differenzwert; und

in einem Fall, in dem der erste Differenzwert größer ist als der erste voreingestellte Differenzwert und der zweite Differenzwert kleiner ist als der zweite voreingestellte Differenzwert, Bestimmen, dass das Zielobjekt tatsächlich versetzt wurde.

8. Positionsbestimmungsvorrichtung nach einem der Ansprüche 5 bis 7, wobei in Reaktion darauf, dass das voreingestellte Modell ein Modell für eine voreingestellte Größe eines Fußgängerschritts ist, das Modell für eine voreingestellte Größe eines Fußgängerschritts, das vom ersten Bestimmungsmodul (10) verwendet wird, Folgendes ist:

$L_k = b + cf(k) + dv + \delta$, wobei $L_k$ ein tatsächlicher Abstand des Zielobjekts in der k-ten Instanz ist, $f(k)$ eine Bewegungsfrequenz des Zielobjekts in der aktuellen Abtastinstanz ist, v eine Varianz von Beschleunigungsdaten ist, die vom Zielobjekt in der aktuellen Abtastinstanz erzeugt wird, $b$ eine Konstante ist, c bzw. $d$ Parameterwerte von entsprechenden Variablen sind, $b, c$ und $d$ aus dem Trainieren des Zielobjekts erhalten werden und $\delta$ ein Modellsystemrauschen ist.

9. Mobiles Endgerät, das die Positionsbestimmungsvorrichtung nach einem der Ansprüche 5 bis 8 umfasst.

10. Computerspeichermedium, auf dem computerausführbare Anweisungen gespeichert sind, wobei die computerausführbaren Anweisungen, nachdem sie ausgeführt wurden, in der Lage sind, das Verfahren nach einem der Ansprüche 1 bis 4 zu implementieren.

**Revendications**

1. Procédé de positionnement, comprenant de :

déterminer (S102) une distance réelle entre une première position et une deuxième position d'un objet cible selon un modèle prédéfini en réponse à la détermination d'un déplacement réel de l'objet cible, et déterminer un angle de cap correspondant à la distance réelle selon un capteur de direction, dans lequel la première position est une position correspondant à un instant d'échantillonnage actuel, et la deuxième position est une position à un instant d'échantillonnage précédent adjacent à l'instant d'échantillonnage actuel ;

déterminer (S104) la première position de l'objet cible selon une position de référence prédéterminée, la distance réelle et l'angle de cap, et prendre la première position comme position de référence prédéterminée pour calculer une troisième position, dans lequel la troisième position est une position à un instant d'échantillonnage suivant adjacent à l'instant d'échantillonnage actuel ; et

**caractérisé en ce qu'**avant de déterminer la distance réelle entre la première position et la deuxième position de l'objet cible selon le modèle prédéfini, le procédé comprend en outre de :

acquérir des accélérations dans trois axes de direction d'un système de coordonnées tridimensionnel par l'intermédiaire d'un capteur à trois axes, et déterminer une amplitude d'une accélération de l'instant d'échantillonnage actuel selon les accélérations dans les trois axes de direction ; obtenir des premières données d'accélération en réalisant (S3) un filtrage moyen sur l'amplitude de l'accélération de l'instant d'échantillonnage actuel sur la base d'une première fenêtre de temps glissant prédéfinie, et obtenir des deuxièmes données d'accélération en réalisant un filtrage moyen sur l'amplitude de l'accélération de l'instant d'échantillonnage actuel sur la base d'une deuxième fenêtre de temps glissant prédéfinie, dans lequel une durée de la deuxième fenêtre de temps glissant prédéfinie est plus courte qu'une durée de la première fenêtre de temps glissant prédéfinie ; et

en réponse au fait que les deuxièmes données d'accélération sont supérieures aux premières données d'accélération, détecter si l'amplitude de l'accélération de l'instant d'échantillonnage actuel est la même qu'une amplitude d'une accélération de l'instant d'échantillonnage précédent, et dans un cas où l'amplitude de l'accélération de l'instant d'échantillonnage actuel n'est pas la même que l'amplitude de l'accélération de l'instant d'échantillonnage précédent, déterminer que l'objet cible s'est réellement déplacé ; et en réponse au fait que les deuxièmes données d'accélération sont inférieures ou égales aux premières données d'accélération, mettre à jour l'amplitude de l'accélération de l'instant d'échantillonnage précédent avec l'amplitude de l'accélération de l'instant d'échantillonnage actuel.

2. Procédé de positionnement selon la revendication 1, dans lequel, après avoir déterminé la distance réelle entre la première position et la deuxième position de l'objet cible selon le modèle prédéfini, et après avoir déterminé l'angle de cap correspondant à la distance réelle selon le capteur de direction, le procédé comprend en outre de :
connecter la position de référence prédéterminée et la première position pour tracer un itinéraire de déplacement.

3. Procédé de positionnement selon la revendication 1, dans lequel, dans le cas où l'amplitude de l'accélération de l'instant d'échantillonnage actuel n'est pas la même que l'amplitude de l'accélération de l'instant d'échantillonnage précédent, la détermination du fait que l'objet cible s'est réellement déplacé comprend de :

   détecter si un intervalle de temps entre un temps d'acquisition de l'amplitude de l'accélération de l'instant d'échantillonnage précédent et un temps d'acquisition de l'amplitude de l'accélération de l'instant d'échantillonnage actuel est dans une plage de temps prédéfinie ; et
   dans un cas où l'intervalle de temps entre le temps d'acquisition de l'amplitude de l'accélération de l'instant d'échantillonnage précédent et le temps d'acquisition de l'amplitude de l'accélération de l'instant d'échantillonnage actuel est dans la plage de temps prédéfinie, détecter si une première valeur de différence entre une accélération maximale parmi des données d'accélération d'origine correspondant à l'amplitude de l'accélération de l'instant d'échantillonnage actuel et l'amplitude de l'accélération de l'instant d'échantillonnage actuel est plus grande qu'une première valeur de différence prédéfinie, et détecter si une deuxième valeur de différence entre l'amplitude de l'accélération de l'instant d'échantillonnage actuel et une accélération minimale parmi les données d'accélération d'origine correspondant à l'amplitude de l'accélération de l'instant d'échantillonnage actuel est inférieure à une deuxième valeur de différence prédéfinie ; et dans un cas où la première valeur de différence est supérieure à la première valeur de différence prédéfinie et où la deuxième valeur de différence est inférieure à la deuxième valeur de différence prédéfinie, déterminer que l'objet cible s'est réellement déplacé.

4. Procédé de positionnement de l'une quelconque des revendications 1 à 3, dans lequel, en réponse au fait que le modèle prédéfini est un modèle prédéfini de taille de pas de piéton, le modèle prédéfini de taille de pas de piéton est :
$L_k = b + cf(k) + dv + \delta$, où $L_k$ est une distance réelle de l'objet cible à un $k^{\text{ième}}$ instant, $f(k)$ est une fréquence de déplacement de l'objet cible à l'instant d'échantillonnage actuel, v est une variance de données d'accélération générées par l'objet cible à l'instant d'échantillonnage actuel, b est une constante, c et d sont des valeurs de paramètres de variables correspondantes respectivement, b, c et d sont obtenus à partir de l'entraînement de l'objet cible, et $\delta$ est un bruit de système modèle.

5. Appareil de positionnement, comprenant :

   un premier module de détermination (10) qui est configuré pour déterminer une distance réelle entre une première position et une deuxième position d'un objet cible selon un modèle prédéfini en réponse à la détermination d'un déplacement réel de l'objet cible, et déterminer un angle de cap correspondant à la distance réelle selon un capteur de direction, dans lequel la première position est une position correspondant à un instant d'échantillonnage actuel, et la deuxième position est une position à un instant d'échantillonnage précédent adjacent à l'instant d'échantillonnage actuel ; et
   un module de positionnement (11) qui est configuré pour déterminer la première position de l'objet cible selon une position de référence prédéterminée, la distance réelle et l'angle de cap, et prendre la première position comme position de référence prédéterminée pour calculer une troisième position, dans lequel la troisième position est une position à un instant d'échantillonnage suivant adjacent à l'instant d'échantillonnage actuel ;
   **caractérisé en ce que** l'appareil de positionnement comprend en outre :

      un deuxième module de détermination qui est configuré pour acquérir des accélérations dans trois axes de direction d'un système de coordonnées tridimensionnel par l'intermédiaire d'un capteur à trois axes, et déterminer une amplitude d'une accélération de l'instant d'échantillonnage actuel selon les accélérations dans les trois axes de direction ; et obtenir des premières données d'accélération en réalisant filtrage moyen sur l'amplitude de l'accélération de l'instant d'échantillonnage actuel sur la base d'une première fenêtre de temps glissant prédéfinie, et obtenir des deuxièmes données d'accélération en réalisant un filtrage moyen sur l'amplitude de l'accélération de l'instant d'échantillonnage actuel sur la base d'une deuxième fenêtre de temps glissant prédéfinie, dans lequel une durée de la deuxième fenêtre de temps glissant prédéfinie est plus courte qu'une durée de la première fenêtre de temps glissant prédéfinie ;

un module de détection, qui est configuré pour : en réponse au fait que les deuxièmes données d'accélération sont supérieures aux premières données d'accélération, détecter si l'amplitude de l'accélération de l'instant d'échantillonnage actuel est la même qu'une amplitude d'une accélération de l'instant d'échantillonnage précédent, et dans un cas où l'amplitude de l'accélération de l'instant d'échantillonnage actuel n'est pas la même que l'amplitude de l'accélération de l'instant d'échantillonnage précédent, déterminer que l'objet cible s'est réellement déplacé ; et

un module de mise à jour qui est configuré pour : en réponse au fait que les deuxièmes données d'accélération sont inférieures ou égales aux premières données d'accélération, mettre à jour l'amplitude de l'accélération de l'instant d'échantillonnage précédent avec l'amplitude de l'accélération de l'instant d'échantillonnage actuel.

6. Appareil de positionnement selon la revendication 5, comprenant en outre : un module de dessin qui est configuré pour connecter la position de référence prédéterminée et la première position pour tracer un itinéraire de déplacement.

7. Appareil de positionnement selon la revendication 5, dans lequel le module de détection est configuré pour :

dans le cas où l'amplitude de l'accélération de l'instant d'échantillonnage actuel n'est pas la même que l'amplitude de l'accélération de l'instant d'échantillonnage précédent, détecter si un intervalle de temps entre un temps d'acquisition de l'amplitude de l'accélération de l'instant d'échantillonnage précédent et un temps d'acquisition de l'amplitude de l'accélération de l'instant d'échantillonnage actuel est dans une plage de temps prédéfinie ;

dans un cas où l'intervalle de temps entre le temps d'acquisition de l'amplitude de l'accélération de l'instant d'échantillonnage précédent et le temps d'acquisition de l'amplitude de l'accélération de l'instant d'échantillonnage actuel est dans la plage de temps prédéfinie, détecter si une première valeur de différence entre une accélération maximale parmi des données d'accélération d'origine correspondant à l'amplitude de l'accélération de l'instant d'échantillonnage actuel et l'amplitude de l'accélération de l'instant d'échantillonnage actuel est plus grande qu'une première valeur de différence prédéfinie, et détecter si une deuxième valeur de différence entre l'amplitude de l'accélération de l'instant d'échantillonnage actuel et une accélération minimale parmi les données d'accélération d'origine correspondant à l'amplitude de l'accélération de l'instant d'échantillonnage actuel est inférieure à une deuxième valeur de différence prédéfinie ; et

dans un cas où la première valeur de différence est supérieure à la première valeur de différence prédéfinie et où la deuxième valeur de différence est inférieure à la deuxième valeur de différence prédéfinie, déterminer que l'objet cible s'est réellement déplacé.

8. Appareil de positionnement de l'une quelconque des revendications 5 à 7, dans lequel, en réponse au fait que le modèle prédéfini est un modèle prédéfini de taille de pas de piéton, le modèle prédéfini de taille de pas de piéton utilisé par le premier module de détermination (10) est :

$L_k = b + cf(k) + dv + \delta$, où $L_k$ est une distance réelle de l'objet cible à un $k^{\text{ième}}$ instant, $f(k)$ est une fréquence de déplacement de l'objet cible à l'instant d'échantillonnage actuel, $v$ est une variance de données d'accélération générées par l'objet cible à l'instant d'échantillonnage actuel, $b$ est une constante, $c$ et $d$ sont des valeurs de paramètres de variables correspondantes respectivement, $b$, $c$ et $d$ sont obtenus à partir de l'entraînement de l'objet cible, et $\delta$ est un bruit de système modèle.

9. Terminal mobile, comprenant l'appareil de positionnement de l'une quelconque des revendications 5 à 8.

10. Support de stockage informatique stockant des instructions exécutables par ordinateur, dans lequel, lorsqu'elles sont exécutées, les instructions exécutables par ordinateur sont capables de mettre en œuvre le procédé de l'une quelconque des revendications 1 à 4.

Determine an actual distance between a first position and a second position of a target object according to a preset model, and determine a heading angle corresponding to the actual distance according to a direction sensor

S102

Determine the first position of the target object according to a predetermined reference position, the actual distance and the heading angle, and take the first position as a predetermined reference position for calculating a third position

S104

FIG. 1

First determination module 10

Positioning module 11

FIG. 2

Acquire a position of a pedestrian at a pervious instant ⟋S1

Calculate an overall acceleration ⟋S2

Perform sliding time window average filtering on acceleration data generated from walking of the pedestrian ⟋S3

determine whether the pedestrian possibly takes one step ⟋S4

No

Yes

whether the pedestrian actually takes one step ⟋S5

No

Yes

Estimate a length of each step of the pedestrian according to a pedestrian step length model obtained by an off-line training ⟋S6

Obtain a real-time heading angle of the pedestrian through calculation ⟋S7

Perform real-time positioning ⟋S8

Draw moving trajectory ⟋S9

whether to end the positioning ⟋S10

No

Yes

End the positioning ⟋S11

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710805524
- US 2014236479 A1
- US 5583776 A

**Non-patent literature cited in the description**

- Indoor positioning system based on improved PDR and magnetic calibration using smartphone. **HUANG CHENGKAI et al.** 2014 IEEE 25TH ANNUAL INTERNATIONAL SYMPOSIUM ON PERSONAL, INDOOR, AND MOBILE RADIO COMMUNICATION (PIMRC). IEEE, 02 September 2014, 2099-2103